# EUROPÄISCHE PATENTSCHRIFT

(11) **EP 2 372 957 B1**
(45) Veröffentlichungstag und Bekanntmachung des Hinweises auf die Patenterteilung: **23.05.2012**
(21) Anmeldenummer: 11156360.7
(22) Anmeldetag: 01.03.2011
(51) Int. Cl.: H04L 12/28, H04L 12/56, H04J 14/02, H04N 7/22, H04N 7/24

(54) **Anordnung zur Datenübertagung**
Data transmission facility
Agencement de transmission de données

(30) Priorität: 06.03.2010 DE 202010003234 U
(43) Veröffentlichungstag der Anmeldung: 05.10.2011
(73) Patentinhaber: KEYMILE GmbH, 30179 Hannover (DE)
(72) Erfinder: Hertwig, Detlef, 30177, Hannover (DE); Padrok, Andreas, 30455, Hannover (DE); Pieper, Daniela, 31234, Edemissen (DE); Puschmann, Norbert, 30826, Garbsen (DE); Prenner, Christian, 30851, Langenhagen (DE); Schobel, Dieter, 30900, Wedemark (DE); Skubowius, Karin, 30926, Seelze (DE)
(74) Vertreter: Döring, Roger

(56) Entgegenhaltungen:
- EP-A2- 1 235 433
- DE-A1-102006 000 940
- US-A1- 2005 053 376
- US-A1- 2005 152 697
- US-B1- 6 496 639
- WAN-KI PARK ET AL: "CONVERGENCE OF BROADCASTING AND COMMUNICATION IN HOME NETWORK USING AN EPON-BASED HOME GATEWAY AND OVERLAY", IEEE TRANSACTIONS ON CONSUMER ELECTRONICS, IEEE SERVICE CENTER, NEW YORK, NY, US, Bd. 51, Nr. 2, 1. Mai 2005 (2005-05-01), Seiten 485-493, XP009085627, ISSN: 0098-3063, DOI: DOI:10.1109/TCE.2005.1467991

## Beschreibung

Die Erfindung bezieht sich auf eine Anordnung zur Datenübertragung zwischen einem digitalen Übertragungsnetz und mit demselben verbundenen Teilnehmern, in welehereine Platine mit gedruckter Schaltung eingesetzt ist, welche einerseits Anschlüsse zum Anschließen der Teilnehmer und andererseits eine elektrische Steckverbindung zum Anschluß an das Übertragungsnetz aufweist und auf welcher neben anderen aktiven und passiven Bauteilen ein Switch und ein Wandler für elektrische in optische Da te n und umgekehrt angeordnet sind.

Derartige Anordnungen sind bekannt und auf dem Markt erhältlich. Sie dienen dazu, eine Anzahlvon Teilnehmem eines Datenübertragungsnetzes-im folgenden kurz "Netz" genannt - mittels einer so genannten "Service Unit" (SU) mit d e m Netz zu verbinden. Ein so lc he s Netz ist beispielsweise das Ethernet. Die SU ist eine Platine bzw. Leiterkarte mit gedruckter Schaltung, die parallel zu einergrößeren Anzahl von SUs in ein Gestell eingeschoben werden kann. Sie hatvorgegebene Abmessungen. Die Datenübertragung ist eine bidirektionale optische Datenübertragung zwisc he n an der SU angebrachten, den Teilnehmern zugeordneten Anschlüssen und den Teilnehmern jeweils über eine optische Leitung.

Auf der Steckseite der SU befindet sich mindestens ein elektrischer Steckverbinder; der in Arbeitsposition mit dem Netz verbunden ist. Auf der SU sind neben anderen aktiven und p a ssive n Bauteilen ein Switch als elektrische Verbindungsstelle zum Ne tz, an dem elektrischen Daten ankommen und von dem elektrische Daten ausgehen, und ein Wandlerangeordnet, derdie elektrischen in optische Daten und umgekehrt umwandelt. Die Anschlüsse der Teinehmer sind überoptische leiter mit dem Wandlerverbunden.

Der Erfindung liegt die Aufgabe zugrunde, die eingangs geschilderte Anordnung so zu gestalten, daß unter Beibehalt der Abmessungen der Platine zumindest eine zusätzliche Funktion zu den Teilnehmem übertragen werden kann.

Diese Aufgabe wird gemäß der Erfindung dadurch gelöst,
- daß an der Platine zusätzlich ein Anschluß für e in Fernsehsignal angebracht ist,
- daß auf der Platine außerdem ein optisches Modulangeordnet ist, das zumindest einen Teiler für das Fernsehsignal und eine der Anzahl der Teilnehmer entsprechende Anzahl von Multiplexern enthält,
- daß der Wandler mit eine der Anzahl der Teilnehmere entsprechenden Anzahl von Ausgängen ausgerüstet ist, die überoptische Leiter mit mindestens einem Eingang des Moduls verbunden sind,
- daß auch der Anschluß des Fernsehsignals über einen optischen Leiteran einen Engang des Moduls angeschlossen ist und
- daß mindestens ein Ausgang des Modulsüber von einander getrennte optische Leiter mit den Anschlüssen der Teilnehmerveibunden ist.

In dieser Anordnung ist die in der SU eingesetzte Platine innerhalb ihrer vorgegebenen Abmessungen optimal ausgenutzt. Durch das auf der Platine angeordnete Modul, dasan die Abmessungen der Platine angepaßte, relativ kleine Abmessungen hat, ist es möglich, neben den Datensignalen auch ein Fernsehsignal mit nur einer SU zu den Teilnehmern zu übertragen. Eine getrennte Platine für Bauteile zum Abschließen des Fernsehsignals und deren Verbindungen mit den Bauteilen der SU werden dadurch nicht mehr benötigt Der Platzbedarf zur Übertragung des Fernsehsignals innernalb eines Gestells, in welches die SU in Arbeitsposition zusammen mit einer größeren Anzahlähnlicher Geräte eingesteckt ist, ist mit der neuen Anordnung wesentlich reduziert.

DasinderSUeingesetzte Modul ist ein passives optisches Bauteil, in dem unterschiedliche Funktionen vorhanden sind. Zum Modul gehören zumindest ein Teiler für das Fernsehsignal und für jeden Teilnehmerein Multiplexer. Der Teilerteilt das dem Modul zugeführte Fernsehsignal in eine AnzahlgleicherSignale auf, welche der Anzahlderan die SU angeschlossenen Teilnehmerentspricht. Die aufgeteilten Signal des Fernsehsignals werden in je einem Multiplexer auf die zu den Teilnehmern zu übertragenden einzelnen Datensignale gemultiplext und zusa mme n mit denselben zu jedem einzelnen angeschlossenen Teilnehmerübertragen. Der Datenaustausch zwischen den Teilnehmern und dem Netz bleibt davon unberührt, so daß die entsprechenden aktiven und passiven Bauteile der Platine unverändert erhalten bleiben.

Ein Ausführungs beispiel des Erfindungsgegenstandes ist in den Ze ic hnung e n dargestellt.

Es zeigen:
Fig. 1 in sc he ma tisc he r Darstellung eine Draufsicht auf die Anordnung nach d e r Erfindung.
Fig. 2 die durch Pfeile gekennzeichneten Übertragungswege innerhalb der Anordnung.

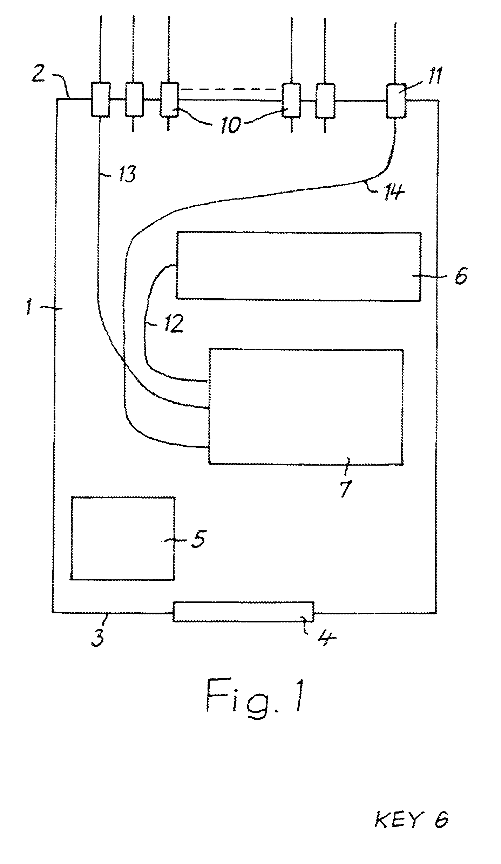

Die in Fig. 1 wiedergegebene "Service Unit" - im folgenden weiterkurz "SU" genannt -besteht im wesentlichen aus einer Platine 1 mit einer gedruckten Schaltung, die an sich bekannt und daher nicht genauer dargestellt ist. Die Platine 1 hat eine Frontseite 2 und eine Rückseite 3. Auf der Platine 1 ist eine Anzahl von aktiven und passiven Bauteilen angeordnet, die überdie Strombahnen der gedruckten Schaltung elektrisch mit einander vernunden sind und gegebenenfalls mit Strom versorgt werden. Von diesen Bauteilen sind nur die eingezeichnet, die für das Verständnis der Erfindung von Bedeutung sind.

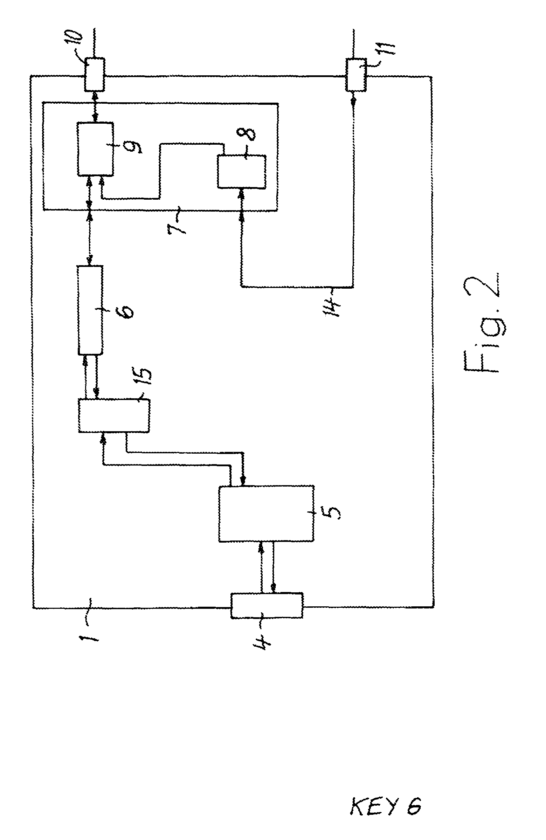

Diese Bauteile der SU sind ein an der Rückseite 3 der Platine 1 befindlicher Steckverbinder4, der auch aus zwei oder mehr Teilen bestehen kann, ein Switch 5, ein Wandler 6, zur Umwandlung von optischen Signale in elektrische und umgekehrt, sowie ein Modul 7. Der Modul 7 ist ein passives optisches Bauteil, in dem zumindest ein Teiler 8 und mehrere Multiplexer 9, von denen in Fig. 2 nur eine eingezeichnet ist, enthalten sind. Der Teiler 8 dient zum Aufteilen eines dem Modul 7 zugeführten Fernsehsignals auf einer der Anzahl der Teilnehmere entsprechende Anzahl gleicher Signale. Die Anzahl der Multiplexer 9 entspricht der Anzahl der Teilnehmer. Jeder Multipliexer 9 ist einem Teilnehmerzugeordnet. Er multiplext den entsprechenden Teil des Fernsehsignals auf das zum Teilnehmer zu übertragende Datensignal.

An der Frontseite 2 der Platine 1 sind eine Anzahl von Anschlüssen 10 für unterschiedliche Teilnehmer sowie ein Anschluß 11 für ein Fernsehsignal angebracht. Zwischen dem Wandler6 und dem Modul 7 einerseits sowie dem Modul 7 und den Anschlüssen 10 der Teilnehmer andererseits sind optische leiter 12 bzw. 13 angeschlossen, von denen der Übersichtlichkeit halber jeweils nur einer eingezeichnet ist. Die Anzahl der optischen leiter 12 bzw. 13 entspricht der Anzahl der Teilnehmer. Der Anschluß 11 des Fernsehsignals ist über einen eigenen optischen leiter 14 mit dem Modul 7 verbunden. Als optische Leiter 12, 13 und 14 sind mit Vorteil Glasfasern eingesetzt. An die Platine 1 der SUsind beispielsweise 24 Teilnehmer angeschlossen.

Die Anordnung nach der Erfindung arbeitet beispielsweise wie folgt:

In dem Modul 7 wird aus dem Fernsehsignal mit einer Wellenlänge von beispielsweise 1550 nm durch den Teiler 8 eine Anzahlvon gleichen Signalen gebildet, die der Anzahlder Teilnehmer entspricht. Die überden Steckverbinder4 auf die SU gelangenden, aus dem Netz kommenden Daten werden in dem Switch 5 auf die Teilnehmer aufgeteilt und von dort auf sogenannte PHY-Bausteine 15 (Fig. 2) gegeben. Je des dabei aufgeteilte Datenpaketerhälteine Adresse, die nureinmal vergeben wird und jeweils zu einem der Teilnehmergehört. DerPHY-Bauste in 15 stellt die zu den Teil nehmern zu übertragenden Daten bzw. Datenpakete fürden Wandler 6 zur Verfügung. Im Wandler6 werden die Daten in optische Signale mit einer Wellenlänge von beispielsweise 1490 nm gewandelt. Diese optischen Signale, die mit der vom Switch 5 vergebenen Adresse markiert sind, werden überdie optischen Leiter 12 dem Modul 7 aufgegeben. Im Modul 7 wird das bereits aufgeteilte Fernsehsignal auf die optischen Signale gemultiplext. Die so vervollständigten optischensignale werden dann über die optischen Leiter 13 zu den einzelnen Teilnehmern übertragen.

Die Datenübertragung von den Teilnehmern zum Netz bleibt in bisheriger Technik erhalten. Die beispielsweise mit einer Wellenlänge von 1310 nm von den Teil nehmern gesendeten optischen Signal werden im Modul 7 für jeden Teilnehmeranschluß gede multiplext. Sie gelangen vom Modul 7 zum Wandler6, in dem die optischen Signale in elektrische Signal gewandelt werden. See werden dann überden PHY-Baustein 15, den Switch 5 sowie den Steckverbinder 4 dem Netz zugeführt.

## Patentansprüche

1. Anordnung zur Datenübertragung zwischen einem digitalen Übertragungsnetz und mit demselben verbundenen Teilnehmern, in welcher eine Platine mit gedruckter Schaltung eingesetzt ist, welche ein erseits Anschlüsse zum Anschließen der Teilnehmer und andererseits eine elektrische Steckverbindung zum Anschluß an das Übertragungsnetz aufweist und auf welcher neben anderen aktiven und p a ssive n Bauteilen ein Switch und ein Wandler (6) für elektrische in optische Da te n und umgekehrt ungeordnet sind, **dadurch gekennzeichnet,**
- **daß** an der Platine (1) zusätzlich ein Anschluß (11) für ein Fernsehsignal angebracht ist,
- **daß** auf der Platine (1) außerdem ein optisches Modul (7) angeordnet ist, das zumindest einen Teiler (8) für das Fersehsignal und eine der Anzahlder Teilnehmer entsprechende Anzahl von Multiplexern (9) enthält,
- **daß** der Wandler (6) mit einer der Anzahl der Teilnehmerentsprechenden Anzahlvon Ausgängen ausgerüstet ist, die überoptische Leiter (12) mit mindestens einem Eingang des Moduls (7) verbunden sind,
- **daß** auch der Anschluß (11) des Fernsehsignals über einen optischen Leiter (14) an einen Engang des Moduls (7) angeschlossen ist und
- **daß** mindestens ein Ausgang des Moduls (7) übervoneinandergetrennte optische Leiter (13) mitden Anschlüssen (10) der Teilnehmer verbünden ist.

2. Anordnung nach Anspruch 1, **dadurch gekennzeichnet, daß** die optischen Leiter (12,13,14) Glasfasern sind.

## Claims

1. Arrangement for data transfer between a digital transfer network and subscribers connected to it in which a printed circuit board with a printed circuit is used, which on the one hand has connections for connecting the subscribers and on the otherhand has an electrical connector for the connection to the transfer network and on which beside other active and passive components a switch and a converter (6) fo r c o nve rting electrical into opticaldata and vice versa is provided, **characterised in**
- **that** on the printed circuit board (1) an additionalconnection (11) is mounted for a television signal,
- **that** an optical module (7) also is mounted on the printed circuit board (1), which contains at least one splitter(8) for the television signal and a number of multiplexers (9) which corresponds to the number of subscribers,
- **that** the converter (6) is equipped with a number of outputs which matches the number of subscriber, which are connected to at least one input of the module (5) via optical conductors (12),
- **that** the television signal connection (11) is also connected to an input of the module (7) via an optical conductor (14) and
- **that** at least one output of the module (7) is connected to the connections (10) of the subscribers via optical conductors (13) which are separated from each other.

2. Arrangement according to claim 1, **characterised in that** the optical conductors (12,13,14) are glass fibres

## Revendications

1. Arrangement pour la transmission de données entre un réseau de transmission numérique et les mêmes participants connectés dans laquelle une platine avec une commutation imprimée est mise en oeuvre, laquelle platine présente d'un côté desportspourle raccordement de participants et d'un autre côté une connexion enfichée électrique pourle raccordement au réseau de transmission et sur laquelle, outre d'autres composantes passifs et actifs, sont disposés un Switch et un convertisseur (6) de données électriques en données optiques et inversement, **caractérisée en ce**
- **que** un port (9) pour un signal de télévision est apporté en plus sur la platine (1),
- **que** un module optique (7) qui comporte au moins un distributeur (8) pour le signal de télévision et un nombre de multiplexeurs correspondant au nombre de participants est en outre disposé sur la platine (1),
- **que** le convertisseur (6) est équipé d'un nombre de sorties correspondant au nombre de participants qui sont connectés via une ligne optique (12) avec au moins une entrée du module (5),
- **que** le port (11) du signal de télévision est également raccordé via une ligne optique (14) à une entrée du module (7) et
- **que** au moins une sortie du module (7) est connectée via des lignes de fibre optique séparées (13) aux ports (10) des participants.

2. Arrangement selon la revendication 1, **caractérisée en ce que** les lignes de fibre optique (12, 13, 14) sont des fibres de verre.
